(19) Europäisches Patentamt
European Patent Office
Office européen des brevets

(11) EP 1 500 725 A1

(12) EUROPEAN PATENT APPLICATION
published in accordance with Art. 158(3) EPC

(43) Date of publication:
26.01.2005 Bulletin 2005/04

(21) Application number: 03715765.8

(22) Date of filing: 04.04.2003

(51) Int Cl.⁷: D01F 8/04, G09F 3/02

(86) International application number:
PCT/JP2003/004333

(87) International publication number:
WO 2003/085177 (16.10.2003 Gazette 2003/42)

(84) Designated Contracting States:
AT BE BG CH CY CZ DE DK EE ES FI FR GB GR HU IE IT LI LU MC NL PT RO SE SI SK TR

(30) Priority: 05.04.2002 JP 2002103511
29.11.2002 JP 2002346857

(71) Applicant: Teijin Fibers Limited
Osaka-shi, Osaka 541-0054 (JP)

(72) Inventors:
- YOSHIMURA, Mie, c/o Teijin Fibers Limited
Matsuyama-shi, Ehime 791-8041 (JP)
- IOHARA, Koichi, c/o Teijin Fibers Limited
Matsuyama-shi, Ehime 791-8041 (JP)

(74) Representative: Hallybone, Huw George et al
Carpmaels and Ransford,
43-45 Bloomsbury Square
London WC1A 2RA (GB)

# (54) AUTHENTICATION OBJECT, AUTHENTICATION OBJECT AUTHENTICATION METHOD, AUTHENTICATION OBJECT AUTHENTICATION SYSTEM, AND AUTHENTICATION SERVICE PROVIDING METHOD

(57) The present invention provides an "identifying marker" which is essentially impossible or extremely difficult to produce by imitators, "an identifying method for the identifying marker", "an identifying system for the identifying marker" and "a method of providing an identification service", offering highly precise identifying power which allows identification of counterfeit articles, while being flexibly adaptable to product or service forms provided by providers of products and services and attachable to the products or services even by the providers, while also allowing identification to be easily accomplished by the providers using simple identification means.

[Fig. 3]

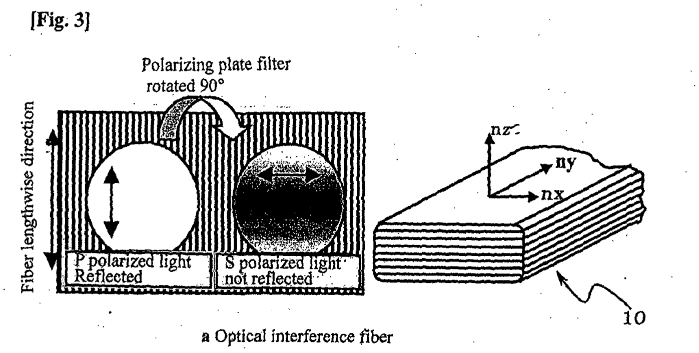


a Optical interference fiber

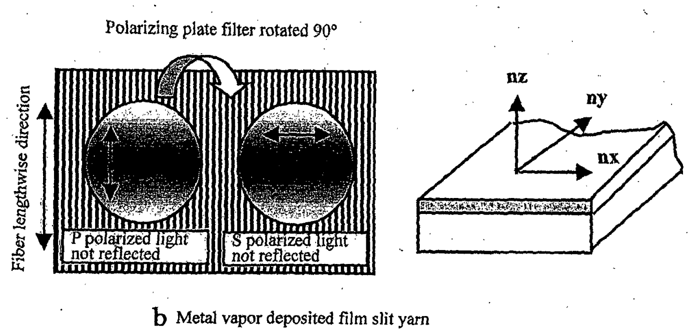


b Metal vapor deposited film slit yarn



Printed by Jouve, 75001 PARIS (FR)

## Description

### Technical Field

The present invention relates to an identifying marker added to a product or service provided by a client, to an identifying method for the identifying marker, to an identifying system for the identifying marker and to a method of providing an identification service.

### Background Art

Counterfeit paper currency, brand goods, jewelry and the like are commonly found that they are distributed on the market posing as genuine articles, and such counterfeit articles range from readily distinguishable counterfeit articles to highly elaborately fabricated counterfeit articles which can only be distinguished from their genuine counterparts by a professional. Various technologies have been developed for distinguishing between counterfeit and genuine articles, and in the case of paper currency, for example, known techniques for distinguishing genuine bills from counterfeit bills include the use of special inks or watermarks, or special printing techniques whereby patterns or colors become altered when copied by commercial copying machines.

However, counterfeit articles have appeared not only for paper currency, brand goods, jewelry and the like, but also for house brand products and services, and therefore a large diversity of fields exist which require identifying means for distinguishing such counterfeits. In most cases it is required that such identifying means must be able to distinguish counterfeit articles in an inexpensive and easy manner. However, because such identifying means must be applied for a wide variety of types of products and services, they are used in many different environments depending on the type of product or service. Identifying markers which can inexpensively and easily identify counterfeit articles while satisfactorily meeting these various requirements have not been known in the prior art. The aforementioned special inks or watermarks, for example, are limited to paper products (or films, in some cases), and cannot be readily applied for purposes involving fiber products such as textiles or nonwoven fabrics. It has therefore been ardently desired to develop identifying markers which can be attached to products and services, without undue effort, by the providers of those products and services even with different forms of the products and services, and which are widely applicable and capable of identifying various types of products and services.

However, it is self-evident that the use of such identifying markers is meaningless unless they themselves are also difficult to mimic. Consequently, it is essential that a high degree of professional knowledge and special technology be required to produce such identifying markers and that the actual production also require considerable cost and time, in order to render it very difficult or practically impossible for counterfeiters, but not the providers, to produce the identifying markers.

Incidentally, optical interference fibers composed of alternating laminated polymer layers with different refractive indexes exists but has not been associated in any way with such identifying markers. Such optical interference fibers are disclosed in detail in Patent Documents 1-5 mentioned below, and it is known that optical interference fibers produce interference coloration of wavelengths in the visible light range due to reflection and interference of natural light. Such light emission has the brightness of metallic luster and exhibits pure, sharp colors (simple colors) at characteristic wavelengths, producing an esthetic quality completely different from coloration due to light absorption by dyes or pigments. The result is a high quality appearance which is perfectly suitable for use in luxury brand goods and the like.

However, such optical interference fibers have only been applied as materials requiring design and esthetic properties in the fields disclosed in Patent Documents 6-9 mentioned below, while the concept of their application as identifying means with an identifying function has not existed in the prior art.

### Disclosure of the Invention

In the course of diligently examining application of optical interference fibers for product uses, the present inventors studied methods of further improving the optical interference properties particularly of a uniaxially oriented optical interference fiber having excellent esthetic properties. As a result, it was found that such an optical interference fiber has a unique reflected light-polarizing property opposite from that observed in the natural world. Specifically, while reflected light polarization in the natural world is predominantly S polarized light, the reflected light polarization of the optical interference fiber is predominantly P polarized light. Also, as a result of exploring techniques for utilizing the very unique property of reflected light polarization in the natural world, we realized that optical interference fiber might be usable as "means for distinguishing counterfeit articles" as described under "Background Art" above, and the present invention was completed upon this concept.

The "identifying marker" of the invention is provided as "an identifying marker attached as a identification target to products and services for identifying those products and services, the identifying marker being characterized in that at least a portion of the identification target is formed by a planar arranged fibrous body made of an optical interference fiber comprising an alternating laminate obtained by laminating layers of polymers with different refractive indexes in an alternating fashion".

Here, if P polarized light and S polarized light are respectively defined as the transmitted light from the polarizing plate slit when the slit axis of the polarizing plate is situated parallel and perpendicular to the direction of orientation of the fibrous body, the fibrous body preferably has color difference anisotropy between the P polarized light and S polarized light.

The identifying marker of the invention preferably has a layer thickness of 0.02-0.3 μm for each layer of the alternate laminated body, preferably with 5-120 laminated layers and preferably with a protective layer surrounding the alternate laminated body.

When the polymers with different refractive indexes of the alternate laminated body are polymer A as the polymer with the high refractive index and polymer B as the polymer with the low refractive index, (polymer A)/(polymer B) is preferably a combination selected from the group consisting of the following: (polyethylene terephthalate having a metal sulfonate salt-containing dibasic acid component copolymerized at 0.3-10 mole percent with respect to the total dibasic acid component) /(polymethyl methacrylate with an acid value of 3 or greater), (polyethylene naphthalate having a metal sulfonate salt-containing dibasic acid component copolymerized at 0.3-5 mole percent with respect to the total dibasic acid component forming the polyester)/(aliphatic polyamide), (copolymerized aromatic polyester obtained by copolymerization of a dibasic acid component and/or a glycol component with at least one alkyl group on a side chain, copolymerized at 5-30 mole percent with respect to the total repeating units)/(polymethyl methacrylate), (polycarbonate having 4,4'-hydroxydiphenyl-2,2-propane as a dihydric phenol component) /(polymethyl methacrylate), (polycarbonate having 4,4'-hydroxydiphenyl-2,2-propane as a dihydric phenol component)/(poly(4-methylpentene)), and (polyethylene terephthalate)/(aliphatic polyamide).

The identifying marker of the invention preferably has, inside the alternate laminated body, a 3-component polymer layer formed in addition to the polymers forming the alternate laminated body, in which case the 3-component polymer layer preferably comprises metal fine particles.

The identifying marker of the invention also preferably comprises, as an identifier, a portion wherein the optical interference fiber is used to construct a body of an identifiable size as a nonwoven fabric, woven fabric, knitted fabric, embroidered fabrics and/or paper, and the fibrous body is preferably a mixture of different types of optical interference fibers having different wavelengths for interference light ranging from the infrared region to the ultraviolet region.

The identification target of the identifying marker of the invention preferably has a painted or dyed, and/or ink-painted or textile printed, and/or printed identifying section containing the optical interference fibers as shortly cut staple fibers.

The "identifying method for the identifying marker" according to the invention is "an identifying method for an identifying marker whereby an identification target attached to a product or service is identified, the method being characterized by constructing at least a portion of the identification target of a fibrous body provided with an optical interference fiber composed of an alternate laminated body obtained by laminating layers of polymers with different refractive indexes in an alternating fashion, and detecting a unique attribute of the optical interference fiber to identify the product or service.

Here, the method is preferably an identifying method for an identifying marker according to claim 11, characterized in that, if P polarized light and S polarized light are respectively defined as the transmitted light from the polarizing plate slit when the slit axis of the polarizing plate is situated parallel and perpendicular to the direction of orientation of the fibrous body, the color difference anisotropy between the P polarized light and S polarized light is detected to identify the product or service.

This method of the invention is more preferably provided as an identifying method for an identifying marker according to claim 11 whereby a color difference (ΔE) of 3.0 or greater between the P polarized light and S polarized light is detected to identify the product or service, wherein interference light composed of infrared, visible and/or ultraviolet light is detected as radiated light and/or reflected light from the fibrous body to identify the identification target.

According to this method of the invention, a polymer layer containing fine particles made of an inorganic, organic and/or metallic material having an identifying function is formed inside the alternate laminated body, and the presence of the fine particles is detected by the identifying function of the fine particles, in order to identify the identification target.

This method of the invention also preferably distinguishes the identification target by image recognition of the alternating laminate contained in the optical interference fiber.

The invention relating to "an identifying system for an identifying marker" is "an identifying system for an identifying marker comprising at least an identifying marker attached to a product or service, a fibrous body composed of an alternate laminated body obtained by laminating layers of polymers with different refractive indexes in an alternating fashion and having an optical interference fiber contained in at least a part of the identification target, and unique attribute detecting means for detection of a unique attribute of the optical interference fiber".

This system preferably also includes an identifying marker comprising the fibrous body possessing at least one specific unique attribute of the optical interference fiber, a database which has stored reference data relating to the specific unique attribute and to the product or service, and checking means which checks the unique attribute detected by the unique attribute detecting means against the reference data stored in the reference database.

In this system of the invention, the reference database and checking means are preferably provided in a freely connectable manner to a server via a telecommunication network. More preferably in the system of the invention, the unique attribute detecting means is a polarizing plate which detects color difference anisotropy between the P polarized light and S polarized light, where P polarized light and S polarized light are respectively defined as the transmitted light from the polarizing plate slit when the slit axis of the polarizing plate is situated parallel and perpendicular to the direction of orientation of the fibrous body.

Preferably in the system of the invention, the unique attribute detecting means is a spectrophotometer for detecting a color difference ($\Delta E$) of 3.0 or greater between the P polarized light and S polarized light, and more preferably the spectrophotometer is a spectrophotometer which can detect a color difference ($\Delta E$) at a specific wavelength from the infrared region to the ultraviolet region.

Even more preferably in this system of the invention, the unique attribute detecting means is image recognizing means which recognizes the image of the alternating laminate.

Finally, the invention relating to "a method of providing an identification service" is "a method of providing an identification service which comprises a presenting step wherein identifying marker data containing at least the specifications and form of distribution relating to a client's product or service bearing the identifying marker are presented by the service provider to the client, a selection step wherein an unique attribute is selected from among the intrinsic attributes of the optical interference fiber comprising an alternate laminated body obtained by laminating layers of polymers with different refractive indexes in an alternating fashion, based on the presented identifying marker data, in order to identify the product or service, a determining step wherein the attachment mode for attachment of the identifying marker, of which at least a portion contains a planar arranged fibrous body as the identification target, to the product or service is determined, a fabricating step wherein the identifying marker having the selected unique attribute is fabricated into the attachment mode, and a providing step wherein the fabricated identifying marker is provided to the client".

This method of providing an identification service according to the invention preferably includes a matching step wherein the unique attribute selected by the service provider is uniquely matched in a one-to-one correspondence with the product or service, and a storing step wherein the matched information is stored in a database.

The method of providing an identification service according to the invention also preferably includes a reading step wherein the unique attribute conveyed from the identifying marker attached to the product or service is read, a checking step wherein the read unique attribute is checked against data stored in the database, and an ascertaining step wherein the product or service is ascertained based on the checking step.

In the method of providing an identification service according to the invention, the unique attribute is preferably color difference anisotropy between the P polarized light and S polarized light of at least one specific wavelength.

## Brief Description of the Drawings

Fig. 1 is a schematic illustration showing the lateral cross-section of an optical interference fiber according to the invention.

Fig. 2 is a schematic illustration showing lateral cross-sections of two other embodiments of an optical interference fiber according to the invention.

Fig. 3 is a schematic illustration of an identification method based on polarization property, where the optical interference fiber is applied as an identification target.

Fig. 4 is a cross-sectional schematic view of an embroidered section of an embroidered cloth using the optical interference fiber as the embroidering yarn.

Fig. 5 is a schematic image showing an embodiment of using the optical interference fiber as paper.

Fig. 6 is a schematic illustration of an embodiment of using the optical interference fiber as a seal bearing a logo mark.

Fig. 7 is a schematic illustration showing an abbreviated construction of an identification system for an identifying marker according to the invention.

Fig. 8 is a flow chart illustrating a method of providing an identification service according to the invention.

## Best Mode for Carrying Out the Invention

Embodiments of the present invention will now be explained in detail with reference to the accompanying drawings.

Figs. 1 and 2 are schematic views of two embodiments of an optical interference fiber to be included in an identification target according to the invention, showing cross-sections (lateral cross-sections) in the direction perpendicular to the fiber axis. As seen in these illustrations, the optical interference fiber 1, 1' or 1" is formed comprising a flat alternate laminated body 10 having a plurality of alternately laminated layers of two polymer layers with different refractive indexes (polymer 10A layer and polymer 10B layer), and the two optical interference fibers 1' and 1" shown in Fig. 2 are preferred embodiments wherein a protective polymer layer with a thickness of 0.2-10 μm is provided surrounding the alternate laminated body. Here, the thickness of each layer in the alternate laminated body 10 composed of the different polymer layers 10A and 10B will usually be in the range of 0.02-0.3 μm, with the number of laminations of independent polymer layers 10A and 10B being in the range of 5-120 layers. The explanation which follows deals with the representative example of the optical interference fiber 1 shown in Fig. 1 among the embodiments of optical interference fibers 1, 1' and 1", but it will be understood that the explanation applies directly to optical interference fibers 1' and 1" unless otherwise specified.

When visible light rays are reflected and interfere at the alternate laminated body 10 comprising alternate laminated layers of the polymer layer 10A and polymer layer 10B, the clear color tone effect causes a person viewing the laminate to see the clear reflected interference color of visible light rays emitted from, for example, the famous South American morpho butterfly. This optical interference fiber 1 may therefore be used as an identifying marker to be attached to luxury brand goods or the like without any loss of luxurious feel, or rather, adding to the luxurious feel. In the optical interference fiber shown in Figs. 1 and 2, it is preferred to provide a protective polymer layer 11 surrounding the alternate laminated body 10, with the protective polymer layer 11 acting as a sheath (cover) to offer the advantage of allowing further improvement in interlayer peeling prevention and wear resistance of the alternate laminated body, while also increasing the visible light reflecting effect.

The optical interference fiber may be used in a manner of a monofilament or multifilament form. The filament size is not particularly restricted and may be appropriately set in a range which allows the gist of the invention to be satisfied, in consideration of the desired performance of the identifying marker, but it will usually be in the range of 0.2-30 dtex. When the optical interference fiber is used in a cloth, the flatness as represented by the ratio of the long axis length W and the short axis length T (W/T) is in the range of 4-15, as seen in a cross-section perpendicular to the fiber axis direction, in order to avoid inhibition of the optical interference property.

Each polymer in the optical interference fiber has a solubility parameter in the range of 0.8-1.2, and the two different polymers A and B have refractive indexes which are different, as explained above. If the polymer with the high refractive index is designated as component A and the polymer with the low refractive index is designated as component B, possible combinations include polyethylene terephthalate having a metal sulfonate salt-containing dibasic acid component copolymerized at 0.3-10 mole percent with respect to the total dibasic acid component as component A and polymethyl methacrylate with an acid value of 3 or greater as component B, polyethylene naphthalate having a metal sulfonate salt-containing dibasic acid component copolymerized at 0.3-5 mole percent with respect to the total dibasic acid component forming the polyester as component A and an aliphatic polyamide as component B, a copolymerized aromatic polyester obtained by copolymerization of a dibasic acid component and/or a glycol component with at least one alkyl group on a side chain, copolymerized at 5-30 mole percent with respect to the total repeating units as component A and polymethyl methacrylate as component B, polycarbonate having 4,4'-hydroxydiphenyl-2,2-propane as a dihydric phenol component as component A and polymethyl methacrylate as component B, and polyethylene terephthalate as component A and aliphatic polyamide as component B.

The optical interference fiber 1 having such a component structure reflects and interferes with visible light rays resulting in high transparency which cannot be achieved with conventional colorings or dyes, and in order to provide an excellent design property displaying highly reflective hues, the optical interference fiber 1 must have the structure of an alternate laminated body 10 while also satisfying the following specified conditions. Specifically, the optical refractive index $n_a$ and thickness da of the high refractive index polymer layer 10A of the alternate laminated body 10 and the optical refractive index $n_b$ and thickness $d_b$ of the low refractive index polymer layer 10B must satisfy the relationships shown below between $n_a$ and $d_a$ and between $n_b$ and $d_b$. The relationships must also be satisfied for reflection and interference of non-visible light rays such as infrared rays and ultraviolet rays.

Specifically, λ1 for the visible light ray reflecting/interfering layer as defined by $\lambda 1 = 2 (n_a d_a + n_b d_b)$ must satisfy $0.38\ \mu m \le \lambda 1 < 0.78\ \mu m$ (for visible light ray reflecting/interfering layer), $0.2\ \mu m \le \lambda 1 < 0.38\ \mu m$ (for ultraviolet reflecting/interfering layer) and $0.78\ \mu m \le \lambda 1 \le 2\ \mu m$ (for infrared ray reflecting/interfering layer), under conditions such that $1.0 \le n_a < 1.8$, $1.3 \le n_b \le 1.8$ and $1.01 \le n_b/n_a \le 1.8$.

Here, λ1 is the peak wavelength (μm) in the reflected spectrum, in this case representing the primary peak wavelength. The symbols $n_a d_a$ and $n_b d_b$ in the formulas represent, respectively, the "product of optical refractive index and thickness" for the polymer layer 10A forming the high refractive index layer and the "product of optical refractive' index and thickness" for the polymer layer 10B forming the low refractive index layer. The "product of optical refractive index and thickness" is generally referred to as the "optical thickness". Consequently, twice the sum of the optical thicknesses of the high refractive index polymer and low refractive index polymer yields the peak wavelength λ1. If the alternate laminated body 10 of the optical interference fiber 1 is designed and manufactured with this in mind, it will be possible to exhibit a deep and glossy color hue and provide excellent color hue quality.

This may be considered from a different viewpoint, by imagining the fiber lateral cross-section produced by cutting the alternate laminated body 10 perpendicular to the fiber axis of the optical interference fiber 1, as shown in Fig. 3(a). Considering refractive index components $nx_a$ and $nx_b$ in the direction of the lamination plane and refractive index components $nz_a$ and $nz_b$ in the direction perpendicular thereto, for both the high refractive index polymer 10A and low refractive index polymer 10B in the fiber lateral cross-section, the difference between $|nz_a - nz_b|$ and $|nx_a - nx_b|$ for the optical interference fiber 1 containing the alternate laminated body 10 is 0.05 or greater, thus producing refractive index anisotropy, and the optical interference property is exhibited presumably due to this refractive index anisotropy and results in display of a deep, glossy, highly esthetic color hue.

The present inventors conducted further diligent research on the optical interference fiber 1 having this refractive index structure, and as a result, during the course of attempting to achieve improved color hues with excellent esthetic quality, discovered in the optical interference fiber 1 a different type of reflected light polarization property than found in the natural world. Specifically, while S polarized light is equivalent to or predominant over P polarized light in reflected light polarization in the natural world, it was found that with reflected light polarization from the optical interference fiber 1, a unique function is exhibited whereby P polarized light is predominant. Here, P polarized light is polarized light of the observed light reflected by the fiber with the slit axis of the polarizing plate arranged parallel to the lengthwise direction of the oriented fiber aligned in a planar fashion, while S polarized light is polarized light of observed light reflected by the fiber with the slit axis of the polarizing plate arranged at a position crossing perpendicularly with the lengthwise direction of the oriented fiber.

This discovery by the present inventors will now be explained in greater detail with reference to Fig. 3. First, as schematically shown in Fig. 3(a), when the P polarized light is observed by holding the slit axis of the polarizing plate parallel to the lengthwise direction of the optical interference fiber 1 aligned in a planar fashion, the P polarized light is reflected by the optical interference fiber 1 producing a bright field of view. If the slit axis of the polarizing plate is then rotated 90° on the same plane and the S polarized light is observed in the same manner, it was confirmed, surprisingly, that with the optical interference fiber 1 the brightness is drastically attenuated. In contrast, as shown in Fig. 3(b), virtually no difference in brightness was seen between the P polarized light reflected light and S polarized light reflected light with slit yarn obtained by forming a thin metal film on a film and thinly cutting it, or with simple dyed colored fibers.

The present inventors further considered whether this unique property of the optical interference fiber 1 could be utilized in an effective manner. As a result, it was imagined that it could be used for a vast variety of products and services distributed on the marketplace, as an identifying marker allowing the products or services to be followed through the course of distribution in order to distinguish them from other products or services (for example, to distinguish between counterfeits or imitations), to be utilized as an identification target added to products or services without impairing the luxurious quality, and in fact adding to the luxurious quality, of high-quality products and services. This concept was further developed to complete the present invention.

As explained above, it is a major feature of the present invention that the optical interference fiber 1 comprising the alternate laminated body 10 described above is utilized as an identification target to distinguish products and services. It is first necessary to obtain the optical interference fiber 1, and production of such optical interference fiber 1 is described in detail in Patent Document 10 and 11 mentioned above and will not be dealt with here.

Production of the optical interference fiber 1 requires a very high level of knowledge about molecular melt properties and collecting of elaborate molding techniques including know-how for fiber formation, as well as tremendous cost and manpower even just for preparation of the production equipment. These factors constitute advantages, instead of disadvantages, f the optical interference fiber 1 is to be utilized as an identifying marker. That is, since the optical interference fiber 1 is not easy to produce, it cannot be easily obtained by parties other than the manufacturer. This greatly reduces the possibility of the.identifying marker itself being imitated, counterfeited or falsified, while also minimizing the possibility of the function of the identifying marker being lost due to imitation, counterfeiting or falsification. Thus,'an identifying marker employing the optical interference fiber 1 of the invention satisfies a very important condition required for identification of products and services.

Moreover, as mentioned above, the alternately laminated polymer layers 10A and 10B of the optical interference fiber 1 can have freely variable refractive indexes and layer thicknesses by selection of appropriate polymers, and therefore optical interference can be utilized not only in the visible light region which can be seen by observers, but also in the infrared and ultraviolet regions. That is, the optical interference fiber 1 may be imparted with an attribute which cannot be visibly noticed by an observer, and therefore can possess a distinguishing function which will be overlooked by imitators, counterfeiters or falsifiers, thus exhibiting the very excellent property of further improving the ability to distinguish the product or service. If necessary, the peak wavelength $\lambda 1$ may be subtly altered even in the visible light region, for increased distinguishing power. Such a subtle difference can be quantitatively detected using a commercially available spectrophotometer. Specifically, light may be directed toward the fiber aligned on a thin panel and a commercially available spectrophotometer used, setting the slit axis of the polarizing plate in the lengthwise direction of the aligned fiber and at a position rotated 90° on the same plane, to determine the reflected polarization wavelength/reflected light intensity curve, thereby allowing detection of the difference in intensity of reflected light at a specific wavelength between the P polarized light and S polarized light, as a color difference. This color difference (hereinafter referred to as ΔE) between the P polarized light and S polarized light will allow even more precise distinction of the optical interference fiber 1. If ΔE is 3.0 or greater, it will be possible to clearly discriminate the optical interference fiber 1 having the unique function of predominant P polarized light, as distinct from the function found in the natural world.

As mentioned above, the optical interference fiber 1 has the structure of the alternate laminated body 10. Thus, by forming a layer 10C (see Fig. 2(a)), having a third component polymer other than the polymers forming the alternate laminated body 10, at an intermediate layer section of the alternate laminated body 10, and detecting the polymer component or properties, it is possible to further improve the distinguishing function of the optical interference fiber 1. Metal fine particles, or a mixture of other organic and/or inorganic fine particles, may also be included in the third component polymer layer. This will allow the unique attribute hidden in the optical interference fiber 1 to be detected by using not only the aforementioned spectrophotometer, but also other unique attribute detection means such as a fluorescent X-ray analyzer, component analyzer, magnetic detector or the like, thereby further improving the distinguishing function.

When a client developing a product or service on the market desires to utilize a special identifier, various identifying functions may be incorporated into the optical interference fiber 1, and flexibly applied to a wide variety of product and service forms desired by the client. For example, the client may use the identifying marker for product or service forms of various types, sometimes for pure services (for example; music attendance, film attendance, sports attendance, etc.) in the form of a paper ticket or stamp serving as a substitute therefor. In such cases as well, the identifying marker of the invention is constructed of a fibrous identification target comprising the optical interference fiber 1, and thus has the advantage of being flexibly adaptable to various different product and service forms.

In other words, the optical interference fiber 1 utilizes the properties of the fiber for flexible fabrication into various forms such as woven fabrics, knitted fabrics, nonwoven fabrics, embroidered cloths and/or paper, and can therefore be adapted to a wide range of product/service or service forms by different clients. This will be explained in greater detail below.

First, for a woven or knitted fabric, it will be readily appreciated without any particular explanation that the optical interference fiber 1 may be produced by melt spinning into a filament form, and used to produce a woven or knitted fabric. Since methods for fabricating the identifying marker of the invention for various uses in client products and services, and other embodiments thereof, are described in detail in Japanese Unexamined Patent Publication HEI No. 11-107109 and Japanese Unexamined Patent Publication No. 2000-170028, for example, these publications will be merely referred to here in place of explanation. However, a description of a float woven fabric highly suitable for detecting polarization properties will provided in brief.

When the optical interference fiber 1 is made into a woven fabric, a multifilament yarn is set as the float component of the woven fabric, but in order to obtain the maximum optical interference effect of the multifilament yarn as a whole, it is essential for the flatness (W/T) of the multifilament yarn to be 4-15. If the flatness is at least 4 and preferably at least 4.5, each filament composing the multifilament yarn will have an autodirectional control function, and the flat long axis planes of each of the structural filaments will converge in a mutually parallel direction to form the multifilament. In other words, when such a multifilament yarn is subjected to pressure contact tension on a take-up roller or stretching roller during the filament forming process, or when it is wound up on a bobbin as a cheese or subjected to pressure contact on a yarn guide or the like during the process of cloth weaving, the flat long axis planes of each filament converge to become parallel at the pressure contact surface, thereby increasing the degree of parallelization of the flat long axis plane of the structural filaments in the multifilament, such that a cloth with excellent optical interference property is obtained. On the other hand, if the flatness exceeds 15, the shape will be too thin and flat, making it difficult to maintain a cross-sectional shape and leading to concerns such as partial folding in the cross-section. From this standpoint, a more manageable flatness is no greater than 15, and especially no greater than 10.

According to the invention, the multifilament yarn composed of such monofilament component units is used as the warp float component and/or weft float component, and the float texture having two or more float strands is used to form the entire woven fabric or a local portion thereof. The number of float strands is the "number of strands passing over the weft yarn", when considering how many weft yarns are passed over and crossed by the warp yarn, when it is used as the warp yarn. For example, in terms of the number of float strands of the warp yarn, the number is 1 for a 1/1 plain weave, 2 for a 2/2 twill weave, 3 for a 3/2 twill weave and 4 for a 4/1 satin weave. The number of float strands of the weft yarn is 3 for a 2/3 twill weave and 4 for a 1/4 satin weave. Thus, using such a float woven fabric as the identification target of the identifying marker eliminates the need to extract the group of filaments from the woven or knitted fabric and align them parallel to the fiber axis direction for observation of the polarization properties of the optical interference fiber 1. In other words, by situating a polarizing plate on the float texture and observing the P polarized light and S polarized light in the fiber axis direction and the direction perpendicular thereto, it is possible to distinguish its attributes without removing the fiber from the woven fabric. As examples of preferred float woven fabrics there may be mentioned satin weaves, jisegado, dobby cloths, twill weaves, checker board weaves and the like:

The next embodiment relates to "embroidering", where the identifying marker is embroidered, or the actual product of the client is directly embroidered for use as the identification target. An embroidering yarn used for the invention may be basically the same as the multifilament yarn used for the woven fabric described above. In this case, the embroidering yarn is inserted in the base fabric, but in order to exhibit a luxurious feel by the embroidering, the overlapping is preferably no greater than 80 filaments and more preferably no greater than 50 filaments in the embroidered section. This will be explained in detail with reference to Fig. 4. Fig. 4 is a cross-sectional schematic view of the embroidered section of an embroidered cloth using an optical interference filament 1 as the embroidering yarn, wherein reference letter S represents the base fabric, reference letter E represents the embroidered section, and reference letter M represents the embroidering yarn. The number of overlapping optical interference filaments (monofilaments) is the number of filaments on any vertical line $L_1$, $L_2$, $L_3$ or $L_4$ as shown here. That is, the number (n) of overlapping filaments is 4 along line $L_1$, and likewise, n=5 on $L_2$, n=6 on $L_3$ and n=3 on $L_4$. If the number of overlapping filaments exceeds 80, almost no interference color will be seen from the embroidered section, resulting in merely a whitish gloss and defeating the point of using the optical interference filaments as embroidering yarn. On the other hand, the interference effect of the filaments is more than adequately exhibited if n is up to 60 filaments. In this case, other colored filaments may be used in combination with the filaments to alter the interference power. For an actual embroidered cloth, incidentally, the embroidering yarn passes through to the rear side of the base fabric (the underside of the base fabric S in the drawing), but this has been omitted in Fig. 4. Although n may be greater than 80 in cases where only distinguishing power is desired without creating a luxurious feel, the identifying marker containing the optical interference fiber 1 as the identification target may be maximally utilized when attached to a luxurious product or service, as a preferred usage. This is also a preferred mode for embroidering of proprietary trademarks and logo marks of clients, since in such cases a polarizing plate may be placed over the embroidered section containing the parallel aligned embroidering yarn to facilitate distinction based on unique polarization properties, as with a float woven fabric.

A nonwoven fabric employing the optical interference fiber 1 may be produced using either a staple fiber (cut fiber) or long fiber, and relevant production processes are described in detail in Japanese Unexamined Patent Publication HEI No. 11-124760 and other publications and will not be discussed here.

The embodiment described above is an example of using the optical interference fiber 1 as a long fiber, but it may be finally used as a staple fiber (cut fiber), as will be explained in detail below, to exhibit unexpected properties different from those of long fibers, as described below.

First, when a long fiber having optical interference properties is cut into staple fiber for preparation of paper, the paper having the staple fiber dispersed therein may be produced in the following manner. Specifically, a filament of the optical interference fiber 1 is cut to a few millimeters and uniformly dispersed in a paper-making raw material comprising water, a dispersing agent, a precipitating agent and a paste. Next, the dispersion is thinly passed through a paper making machine having a fine mesh screen formed on the lower side, to form wet paper. The paper is then dried to obtain the final product paper having staple fibers composed of the optical interference fiber 1 in a dispersed mixture. An embodiment of paper produced in this manner is shown as a schematic image in Fig. 5.

If such paper embodiments are included, the field of utilizing the optical interference fiber 1 as an identification target is extremely broad. In addition, there is no limitation to simple paper, as plastic sheets or films may also be produced in the same manner having optical interference staple fibers dispersed throughout. That is, conjugated fiber filaments may be cut to a few millimeters as for paper, uniformly dispersed in a binding resin solution to make a sheet or film, and then dried to prepare a sheet having coloring staple fibers mixed and dispersed throughout. By forming an adhesive layer on one side of the sheet, it is possible to easily attach the sheet as an identification target onto different products. Although a detailed explanation will be omitted here, the optical interference fiber 1 may be cut short to about 0.01-2 mm into staple fibers, as described in Japanese Unexamined Patent Publication HEI No. 11-241223, and used to prepare a paint, dye and/or ink to form a painted, textile printed and/or printed identifying section. When used by dispersed admixture in a paint or the like, a longer staple fiber length than the range specified above will tend to result in twisting and bending of the cut staple fibers when they are dispersed in the paint. Such twisting can alter the color as coloration is produced at the twisted sections or the structure is altered at bent sections. So long as the staple fiber length is no greater than 2 mm, however, operation will be facilitated as the spray nozzle will not become clogged even when the mixture of staple fibers and adhesive is sprayed in. On the other hand, a staple fiber length shorter than the specified range will render it technically difficult to achieve large-volume cutting to a suitable dimension and shape, and will tend to increase costs. In addition, even if cutting is successful, it will create deformation at the end sections due to shearing at the cut sections, thereby eliminating the flat sections and sections originally exhibiting the color hue, and resulting in alteration of the displayed color.

Such staple fibers may also be used in combination with other surface-modifying materials such as paints and dyes. First, the staple fibers may be bonded to a support and then coated with a paint, or the paint may be coated first and then the staple fibers dispersed before the paint dries to utilize the bonding force of the paint for bonding to the support. The staple fibers may also be used in admixture with the adhesive or paint, and the mixture sprayed, printed or textile printed. The paint or dye used in this case is preferably selected as one which does not adversely affect the coloring property of the staple fibers. Particularly if the directional property of the coloring plane as a property of the staple fibers is not essential, there is essentially no problem if they are used in admixture with a paint. They may also be used by addition to various materials for which coloring properties are desired.

The material of the support is not particularly restricted, and various materials such as metal, wood, plastic, rubber, ceramic, paper, fiber, glass and the like may be used depending on the form of the identifying marker. Such materials may be used alone or as mixtures or laminates of two or more. Also, while thin flat forms such as films, sheets or panels are preferred, thick tabular forms may also be used instead. There is no restriction to flat forms, either, as various three-dimensional structures may also be suitable.

When the staple fibers described above are used as an identification target, for example, the unique attribute of the optical interference staple fibers in the paint, dye and/or ink may be detected by the different unique attribute detecting means referred to above in order to distinguish the target. When the identification target is in the form of such staple fibers, however, the staple fibers will often be oriented randomly, and this will limit utilization of the polarization properties of the optical interference fiber 1. In such cases, depending on the various form of fibers it is preferred to employ the other distinguishing method such as direct confirmation of the shape including the number of layers of the alternate laminated body 10 formed in the staple fibers instead of the polarization property by using an unique attribute detecting means such as a high-magnification optical microscope or an electron microscope. When relatively long cut staple fibers are used such as in a staple fiber nonwoven fabric, there may be employed, of course, a method wherein the staple fibers are removed from the identifying marker and aligned in a planar fashion along the fiber axis for detection of the polarization properties, as appropriate for the working embodiment.

This completes the explanation of the identifying marker of the invention and an identifying method for the optical interference fiber 1 contained in the identifying marker as the identification target. An identifying system for the identifying marker and a method of providing an identification service will now be explained in detail with reference to Figs. 7 and 8.

Fig. 7 is a schematic illustration showing an abbreviated construction of an identification system for an identifying marker according to the invention, and Fig. 8 is a flow chart illustrating a method of providing an identification service according to the invention. In Fig. 7, reference numeral 2 represents the total group of clients and 2a, 2b, ..., 2z represent individual clients. Reference numeral 3 represents the total group of telecommunication terminals used by the clients 2, and 3a, 3b, ..., 3z represent the individual telecommunication terminals. In the example shown in Fig. 7, client 2a has need of an identifying marker attached to product A, client 2b has need of an identifying marker attached to product B and service B, and client 2z has need of an identifying marker attached to product Z.

Reference numeral 4 represents a telecommunication network, and this telecommunication network 4 is composed of a mobile communication network allowing transmission and reception through a portable terminal, a fixed phone line network provided by a phone business, the internet, or a private communication network such as a LAN (local area network) or the like.

Reference numeral 5 represents a service provider which provides an identification service for each client 2, which is a service center in Fig. 7. The service center 5 is equipped with a computer as the service providing server, connected to the telecommunication network 4, and a client management database 51a and identifying marker management database 51b are provided in a storage device connected to the server 50. The server 50 is also provided with unique attribute data input means 52 for inputting of unique attribute data of the identifying marker read by the unique attribute detecting means 53 described above, and it allows input of unique attribute data read from the identifying marker to the server 50. It should be noted here that the location in which the unique attribute detecting means 53 is provided is not limited to being inside the service center 5, and it may be at any desired location. In the case of an analyzing device such as a spectrophotometer, fluorescent X-ray analyzer, electron microscope or polymer composition analyzer, for example, they are preferably kept at a single location, but ordinarily they will be distributed at different sites.

Reference numeral 6 represents a fabricating center wherein the identifying marker is fabricated into various forms such as woven and knitted fabrics, nonwoven fabrics, embroidered cloths, paints, dyes and the like, and 61a, 61b, ..., 61z represent individual fabricating centers. Using Fig. 7 as an example, fabricating center 61a carries out fabrication of woven and knitted fabrics, fabricating center 61b carries out fabrication of nonwoven fabrics and paper, and fabricating center 61z carries out fabrication of paints and dyes. The fabricating centers 6 may be owned by the service provider, or they may be at locations where the service provider has commissioned a third party to carry out the fabrication. If the fabricating centers 6 and service center 5 are connected by the telecommunication network 4, the identifying marker can be provided for the product or service of the client 2 in a flexible and rapid manner, conforming to the desire of the client 2. Upon receiving an order from the client 2, the identifying marker can be flexibly and rapidly fabricated into a form such as a woven or knitted fabric, nonwoven fabric, embroidered cloth, paint, dye or the like. Establishing such a fabricating center 6 will therefore allow prompt modification of the specifications of the identifying marker to be attached to the product or service of the client 2 and adaptation to new products, even in response to an urgent demand by the client 2, and fabrication of the identifying marker into a form suitable for the specifications.

The identification service provided by the identification system having the construction described above will now be further explained with reference to Fig. 8.

As shown in Fig. 7, a client 2 requesting a service relating to an identifying marker containing the aforementioned optical interference fiber 1 as the identification target accesses a computer supplied by the service provider (service center) 5 via the telecommunication network 4 using a communication terminal 3 of the client 2, and requests provision of an identification service (Step S01). It is not essential here for the client 2 to apply for provision of the service via a telecommunication network, but for cases in which the client 2 desires an urgent and rapid service, this mode is preferred for easy connection to the server 50 of the service provider, and therefore a prompter service. The details regarding the provided service are preferably displayed on a web page offered by the server 50, or alternatively by interview with the client or by telephone or fax, for negotiation of the business.

Thus, once the service provider has received a request from the client 2 as shown in Step S01, the next step (S02) confirms whether or not the request relates to a request for fabrication of an identifying marker attached to a product/service of the client 2. If it is found to relate to fabricating service for an identifying marker in this Step S02, it is followed by Step S03, and if not, it is followed by Step S10. The flow from Step S03 onward will be explained here first, followed by an explanation of the flow from Step 10 onward.

Step S03 requires detailed design data for fabrication of the identifying marker. The necessary data such as the specifications and distribution form for the identifying marker to be attached to the product or service provided by the client 2 are inputted into the server 50 of the service provider 5. The inputting for Step S03 is preferably carried out by response to predetermined questions by the client 2 who has accessed the web page offered by the server 50, or by inputting of appropriate responses from among selection options provided in menu form. However, the client 2 may also personally interview with the service provider 5 and the necessary data obtained from the interview may be inputted to the server 50 by the service provider 5.

When the data necessary for Step S03 is inputted to the server 50, the database 51 constructed in storing means composed of a magnetic recording medium or the like connected to the server is accessed, and based on the data stored in the database 51, it is determined which unique attribute should be used of the optical interference fiber 1 serving as the identification target attached to the product or service to be provided by the client 2 (Step S04).

In this case, the unique attribute of the optical interference fiber 1 may be any of the possible unique attributes mentioned above. However, the polarization property is particularly preferred as a unique attribute because it allows the product or service to be identified easily, rapidly and precisely using a polarizing plate as the unique attribute detecting means 53 as explained above. As a specific example of a unique attribute, since the optical interference fiber 1 contains the alternate laminated body 10, image data obtained by photographing a lateral cross-section of the optical interference fiber 1 with an electron microscope or the like may be image processed for pattern recognition of the form and number of layers of the alternate laminated body 10, to allow identification of the product or service based on the form and number of layers. Thus, the form and number of layers of the alternate laminated body 10 may also naturally be used as a unique attribute of the optical interference fiber 1.

If anisotropy data regarding the spectral color difference at a specific wavelength set for the optical interference fiber 1, for a specific product or specific service provided by the client 2, is stored with the information of the client 2 in the database, light at the specific wavelength may be spectrometrically measured with a spectrophotometer to recognize the product or service. The spectral color difference anisotropy data obtained from the identification target comprising the optical interference fiber 1 is checked against the data stored in the identifying marker management database, and coordinated therewith. The checking means for this checking and coordination preferably accomplishes checking of the database 51 by a program already incorporated into the storing means of the computer (server) 50, in order to allow large volumes of data to be processed rapidly and accurately.

For attachment to the product or service in relation to selecting the unique attribute in Step S04, Step S05 is then carried out to determine the mode of attachment of the identifying marker of which at least a portion comprises a fibrous body situated in a planar fashion as the identification target. Although Step S04 is carried out before Step S05 in this example, these steps S04 and S05 are related and are therefore usually carried out simultaneously. Once steps S04 and S05 have been completed, a one-to-one unique correspondence is established between the selected unique attribute data and the product or service provided by the client, in Step S06, and the corresponding data is stored in the database 51 comprising the client management database and the identifying marker management database, in Step S07. Also, the data necessary for fabrication of the determined identifying marker is sent to the different fabricating centers 6 described above, via a telecommunication network 4 if necessary, where the woven or knitted fabric, nonwoven fabric, paper, paint, dye or the like is fabricated and provided to the client 2 (Step S09).

This completes the explanation of Step S02, which includes processing from steps S03 to S09 when a client 2 requests fabrication of an identifying marker attached to a product or service. The following explanation deals with the flow of processing from Step S10 onward, when the client 2 desires a service other than this type of service.

An identification service according to the invention is carried out by the service provider 5 at the request of the client 2, as a service for identification of a unique attribute of the identification target that cannot be handled by the client 2. Such an identification service would include an identification service provided in cases where the client 2 cannot accurately accomplish identification, such as when the product or service is soiled, abraded or damaged during the course of market distribution of the identifying marker attached to the product or service provided by the client 2. Such cases often occur when the identifying marker is used for the client 2 to trace or monitor the course of market distribution of the product or service. This is because the user of the product or service provided by the client 2 may use the product or service in various different types of environments, and the identifying marker may wind up in a state which the client 2 cannot foresee.

Thus, as shown in Step S11, when the client 2 makes a request for identifying the unique attribute of the identification target to identify the product or service, the unique attribute of the identification target composed of the optical interference fiber 1 contained in the identifying marker is read by the unique attribute detecting means 53 described above, based on the data stored in the client management database 51a and the identifying marker management database 51b. In some cases it may be difficult for the client 2 to identify the product or service provided to the user due to breakage or wear during the course of market distribution, but even in such cases, the specific unique attribute imparted to the identifying marker may be gleaned from the data stored in the client management database 51a and the identifying marker management database 51b, and the product or service can often be identified on this basis. The checking means against this database 51 is preferably implemented by software processing carried out according to the procedure of a program already incorporated into the storing means of a computer (server) 50. This completes confirmation of genuineness or identification of the product or service which has been requested by the client 2, thus allowing adaptation to various forms of imitation, counterfeiting, falsification, transformation, etc. of the product or service (Step S13). Finally, the result is reported to the client 2 as Step S14 to complete the process.

Provision of a service other than that described above is processed for each situation according to the desire of the client 2, as shown in Step S15.

## Examples

The present invention will now be explained in greater detail through the following examples. The parameters in the examples were measured by the following methods.

(1) SP value and SP ratio

The SP value is the value represented by the square root of the cohesive energy density (Ec). The Ec of the polymer is determined by immersing the polymer in different solvents and defining the Ec of the polymer as the Ec of the solvent in which the swelling pressure is maximum. The SP values of polymers determined in this manner are listed in "PROPERTIES OF POLYMERS", 3rd Edition; (Elsevier), page 792. For a polymer with an undetermined Ec, it may be calculated from the chemical structure of the polymer. Specifically, it may be determined as the sum of each Ec for the substituents in the polymer. The Ec values for different substituents are listed on page 192 of the aforementioned publication. This method also allows the SP value to be determined for copolymerized polymers, for example. When using this method of determination, the SP value of the high refractive index polymer is designated as SP1, and the SP value of the low refractive index polymer is designated as SP2, with the SP ratio being represented as (SP1/SP2).

(2) Refractive indexes nx and nz

Two different polymers of a fiber were each spun and stretched under the same conditions as for production of the fiber, to produce single stretched yarns. The spinneret used was perforated with circular cross-section holes each having a 0.3 mmφ diameter, and spinning was performed for an unstretched single filament size of 5.5 dtex. The birefringence (Δn) of each stretched yarn was measured and used to calculate nx and nz by the following equation.

$$np = (nz + nx + ny)/3$$

Here, np is the polymer refractive index, and since the polymer has uniaxial polarization, nx = ny and

therefore:

$$nz = 3np - 2nx.$$

Hence, the measured value of $\Delta n = nz - nx = (3np - 2nx) - nx$ yields the equations:

$$nx = (3np - \Delta n)/3$$

$$nz = \Delta n + nx.$$

The birefringence ($\Delta n$) was determined by measuring the interference bands using 1-bromonaphthalene as the penetrant and using monochromatic light at a wavelength of 546 nm in a polarizing microscope, and performing calculation according to the following formula: $\Delta n = 546 \times (n + \theta/180)/X$ (where n is the number of bands, $\theta$ is the compensator rotation angle and X is the fiber diameter).

(3) Polarization property by visual observation

Fifty filaments were arranged in parallel on a black board without spacing between them, the slit axis of the polarizing plate was situated parallel to the lengthwise direction of the parallel planar arranged filaments, and the brightness of the slit section was observed, after which the polarizing plate was rotated 90° in the same plane, the slit section was visually observed and the difference in brightness before and after rotating the polarizing plate was judged on the following scale. Satisfactory optical interference property: Visually discernible difference in brightness of slit section before and after rotation of polarizing plate. Unsatisfactory optical interference property: No visually discernible difference in brightness of slit section before and after rotation of polarizing plate.

(4) Polarization property ($\Delta E$)

The fiber was wound up onto a black board at a winding density of 40 filaments/cm and a winding force of 0.27 cN/dtex (0.3 g/de), and color measurement was performed with a D65 light source, using a Color-Eye™ 3100 (CE-3100) spectrophotometer by Macbeth. The measuring aperture was the 25 mm$\varphi$ large aperture, with ultraviolet rays as the light source, and surface gloss included in the measurement. The polarizing plate was situated at the reflected light detecting aperture, for measurement of the wavelength and intensity curve of polarizing light passing through the slit of the polarizing plate oriented in the lengthwise direction of the filaments and the direction perpendicular thereto, and the color difference $\Delta E$ of reflected light ($\Delta L^*$, $\Delta a^*$, $\Delta b^*$ vector sum: difference between intensity and light modulation) was determined in both directions from the obtained data.

(5) Flatness ratio

A fiber cross-section preparation as a thin cross-sectional slice was photographed under an optical microscope, the length (W) of the long axis and the length (T) of the short axis of the fiber cross-section were measured, and the flatness ratio (W/T) was calculated from the values.

(6) Average thickness (nm) of polymer layer and polymer protective layer

The single filament cross-section of the fiber was observed with a transmission electron microscope and the thickness of each polymer layer and the thickness of the protective layer was measured from the laminated side, with the average value being recorded as the polymer layer average thickness (nm).

[Example 1]

As test fibers for identification there were prepared seven types of fibers (Fibers 1-7) comprising a combination of the two polymers shown in Fig. 9, and having the cross-sectional shape shown in Fig. 2, with a flatness ratio of 8.0 and twenty alternating laminated layers having the average thickness shown in Fig. 9. Separately, each of the polymers shown in Fig. 9 was spun and stretched by the method described in (2) "Refractive indexes nx and nz" above, the birefringence $\Delta n$ of each of the obtained stretched filaments was measured, and the refractive indexes nx and nz were calculated, yielding the results shown in Fig. 10. The results of identifying the prepared fiber samples with a polarizing plate and measuring the polarization properties ($\Delta E$) are shown in Fig. 10.

As clearly seen from Figs. 9 and 10, Fibers 1-4 were judged to have a "satisfactory optical interference property" based on visual observation of the polarization property with the polarizing plate, while the interference and reflection light of the obtained fibers exhibited a polarization property $\Delta E$ of 3.0 or greater, a unique polarization property not found in natural light, thereby allowing identification as an optical interference fiber with specific optical interference performance. These Fibers 1-4 also exhibited pure, distinct coloration, showing a highly esthetic outer appearance. On the other hand, Fiber 5 was judged to have an "unsatisfactory optical interference property" based on visual observation of the polarization property with the polarizing plate, while the polarization property $\Delta E$ was less than 3.0 which was not a unique polarization property. It was conjectured that the optical anisotropy was of an equivalent level for both polymers of the alternate laminated body of Fiber 5. Fiber 6 which had a large alternating laminated layer thickness was judged to have an "unsatisfactory optical interference property" based on visual observation of the polarization property with the polarizing plate, while the polarization property ΔE was even smaller and no unique polarization property was exhibited. It was conjectured that the large laminating laminate layer thickness produced interference and reflection light in the near infrared region which was indistinguishable by visual observation. The coloration was indistinct in Fibers 5 and 6, producing a poorly esthetic outer appearance.

[Comparative Example 1]

Design yarn having an optical interference property was prepared by slitting a metal vapor-deposited film in a fiber shape, and the polarization property ΔE was measured in the same manner as Example 1, yielding a value of 0.59 and producing an insufficient esthetic quality.

[Example 2]

Fiber 7 comprising a combination of the two different polymers shown in Fig. 11 and having an infrared reflection wavelength was cut to a length of 3 mm, and was mixed and uniformly dispersed in a proportion of 30 wt% with a papermaking raw material comprising water, a dispersing agent, a precipitating agent and a paste. The dispersion was then thinly passed through a paper making machine having a fine mesh screen formed on the lower side, to form wet paper. The paper was subsequently dried to obtain the final product paper having a basis weight of 75 $g/cm^2$, with coloring conjugated staple fibers dispersed and mixed therein. A spectrophotometer by Shimadzu Corp. was used for measurement from a wavelength of 250 nm to 2.5 μm.

As clearly seen from Fig. 11, a reflection peak was found in the infrared region of 1480 nm based on the results of spectral measurement of the paper manufactured with Fiber 7. When Fiber 7 and Fiber 1 were each blended at 15 wt% with a paper-making pulp material, visual observation allowed discrimination of the included fiber material having a green coloring effect with a reflection peak at 525 nm, while based on the spectral properties, an infrared reflection peak was detected at 1480 nm. This material may therefore be considered a more difficult material to counterfeit.

[Comparative Example 2]

Fiber A composed of polycarbonate, having a flat fiber cross-sectional shape similar to Fiber 7 of Example 2 but without an internal laminated structure, was cut to 3 mm and mixed at 30 wt% with paper-making pulp in the same manner as above, to manufacture paper. Upon measurement of the spectral properties of the flat yarn composed of a single polymer, visual observation showed an outer appearance similar to the paper comprising Fiber 7 but without reflection in the infrared region.

[Example 3]

Fiber 8 was prepared comprising a 3-component polymer (10A, 10B and 10C), having the cross-section shown in Fig. 2(b) and having a copolymerized polyethylene terephthalate layer comprising 50 mmol% cobalt acetate ($Co(CH_3COO)_2)\cdot 4H_2O$) inside the laminated layer section. The cobalt content of the fiber was 670 ppm. Next, as shown in Fig. 6, Fiber 8 was cut to a length of 0.3 mm and mixed at 15 wt% with an acrylic-based resin solution, and then used to coat a PET film 21 to a thickness of 100 μm and fixed by heat drying to form a cut fiber-containing coating layer 22. An adhesive layer sheet 23 and release sheet 24 were placed thereover to fabricate a seal 2. The PET film 21 was printed with a logo mark 25 or the like beforehand, and the unprinted sections were transparent, allowing recognition of the coloration from the cut fiber uniformly dispersed in the resin layer. This may be used as a seal indicating the model or manufacturer of an electrical appliance. An identification target may be attached to any of various products in a simple manner by forming an adhesive layer on one side of the sheet 2.

A portion of the sheet 2 was measured with an X-ray elemental analyzer for qualitative and quantitative elemental analysis, upon which 58 ppm of cobalt was detected.

[Example 4]

A knitted texture was fabricated using Fiber 1 as an accent yarn, inserted at 1 fiber filament (120 dtex/12 filaments) per 2 cm width of knit texture. A portion of the accent yarn was taken out and fixed onto a flat silicon plate and beam capsule, and then embedded in an epoxy resin for 5 days. The vertical cross-section along the fiber axis was cut to an ultrathin thickness of 50-100 nm with a microtome (ULTRACUT-S), and the cross-section was placed on a grid. Vaporization treatment was carried out with 2% osmium tetraoxide x 60°C x 2 hours, and an LEM-2000 transmission electron microscope was used for observation and photographing at an acceleration voltage of 100 kV. As a result, the alternating laminated structure in the fiber cross-section was clearly observable.

[Comparative Example 3]

A knit with a similar texture was fabricated using as the accent yarn a slit yarn employing a PET film thinly coated with an aluminum compound, and by visual judgment was judged to be the same by two out of five judges, but when the accent yarn was removed out and examined with a transmission electron microscope in the same manner, no laminated structure was observed in the cross-section and it was obvious that it was not a thin-film laminated colored fiber according to the invention.

Industrial Applicability

The present invention offers the ability to achieve highly precise identification, to allow distinction from counterfeit articles, while being flexibly adaptable to product or service forms provided by providers of products and services and attachable to the products or services even by the providers, while identification can also be easily accomplished by the providers using simple identification means. The invention therefore provides an "identifying marker" which is essentially impossible or extremely difficult to produce by imitators, "an identifying method for the identifying marker", "an identifying system for the identifying marker" and "a method of providing an identification service".

## Claims

1. An identifying marker attached as a identification target to a product or service provided by a client for identification of said product or service,

   the identifying marker being **characterized in that** at least a portion of said identification target is formed by a planar arranged fibrous body made of an optical interference fiber comprising an alternate laminated body obtained by laminating layers of polymers with different refractive indexes in an alternating fashion.

2. The identifying marker according to claim 1, wherein if P polarized light and S polarized light are respectively defined as the transmitted light from the polarizing plate slit when the slit axis of the polarizing plate is situated parallel and perpendicular to a direction of orientation of said fibrous body, said fibrous body has color difference anisotropy between said P polarized light and S polarized light.

3. The identifying marker according to claim 1, wherein the layer thickness is 0.02-0.3 μm for each layer of said alternate laminated body, and the count of layers is 5-120 layers.

4. The identifying marker according to claim 1, which has a protective layer surrounding said alternate laminated body.

5. The identifying marker according to claim 1, wherein when the polymers with different refractive indexes of said alternate laminated body are designated as: polymer A as the polymer with the high refractive index and polymer B as the polymer with the low refractive index, (said polymer A)/(said polymer B) is a combination selected from the group consisting of the following:

   (polyethylene terephthalate having a metal sulfonate salt-containing dibasic acid component copolymerized at 0.3-10 mole percent with respect to the total dibasic acid component)/(polymethyl methacrylate with an acid value of 3 or greater), (polyethylene naphthalate having a metal sulfonate salt-containing dibasic acid component copolymerized at 0.3-5 mole percent with respect to the total dibasic acid component forming the polyester)/(aliphatic polyamide), (copolymerized aromatic polyester obtained by copolymerization of a dibasic acid component and/or a glycol component with at least one alkyl group on a side chain, copolymerized at 5-30 mole percent with respect to the total repeating units)/(polymethyl methacrylate), (polycarbonate having 4,4'-hydroxydiphenyl-2,2-propane as a dihydric phenol component)/(polymethyl methacrylate), (polycarbonate having 4,4'-hydroxydiphenyl-2,2-propane as a dihydric phenol component)/(poly(4-methylpentene)), and (polyethylene terephthalate)/(aliphatic polyamide).

6. The identifying marker according to claim 1, which has, inside the alternating laminated body, a 3-component polymer layer formed in addition to the polymers forming said alternate laminated body.

7. The identifying marker according to claim 6, wherein said 3-component polymer layer comprises metal fine particles.

8. The identifying marker according to claim 1, which comprises, as an identifier, a portion wherein the optical interference fiber is used to construct a body of an identifiable size as a nonwoven fabric, woven fabric, knitted fabric, embroidered fabrics and/or paper.

9. The identifying marker according to claim 1, wherein said fibrous body is a mixture of different types of optical interference fibers having different wavelengths for interference light ranging from the infrared region to the ultraviolet region.

10. The identifying marker according to claim 1, wherein said identification target has a painted or dyed, and/or ink-painted or textile printed, and/or printed identifying section containing said optical interference fiber as shortly cut staple fibers.

11. An identifying method for an identifying marker whereby an identification target attached to a product or service is identified, the method being **characterized by** constructing at least a portion of said identification target of a fibrous body provided with an optical interference fiber composed of an alternate laminated body obtained by laminating layers of polymers with different refractive indexes in an alternating fashion, and detecting a unique attribute of said optical interference fiber to identify the product or service.

**12.** The identifying method for an identifying marker according to claim 11, **characterized in that**, if P polarized light and S polarized light are respectively defined as a transmitted light from a polarizing plate slit when the slit axis of the polarizing plate is situated parallel and perpendicular to a direction of orientation of said fibrous body, a color difference anisotropy between said P polarized light and S polarized light is detected to identify said product or service.

**13.** The identifying method for an identifying marker according to claim 11, whereby a color difference ($\Delta E$) of 3.0 or greater between said P polarized light and S polarized light is detected to identify said product or service.

**14.** The identifying method for an identifying marker, according to claim 11, wherein interference light composed of infrared, visible and/or ultraviolet light is detected as radiated light and/or reflected light from said fibrous body to identify said identification target.

**15.** The identifying method for an identifying marker according to claim 11, wherein a polymer layer containing fine particles made of an inorganic, organic and/or metallic material having an identifying function is formed inside said alternate laminated body, and the presence of said fine particles is detected by said identifying function of said particles, in order to identify said identification target.

**16.** The identifying method for an identifying marker according to claim 11, wherein said identification target is identified by image recognition of said alternate laminated body contained in said optical interference fiber.

**17.** An identifying system for an identifying marker comprising at least an identifying marker attached to a product or service, a fibrous body composed of an alternate laminated body obtained by laminating layers of polymers with different refractive indexes in an alternating fashion and having optical interference fibers contained in at least a part of the identification target, and unique attribute detecting means for detecting a unique attribute of said optical interference fibers.

**18.** The identifying system for an identifying marker according to claim 17, which includes an identifying marker comprising said fibrous body possessing at least one specific unique attribute of said optical interference fiber,

a database for storing reference data relating to said specific unique attribute of said fibrous body and to said product or service, and

checking means for checking the unique attribute detected by said unique attribute detecting means against the reference data stored in said reference database.

**19.** The identifying system for an identifying marker according to claim 18, wherein said reference database and checking means are provided in a freely connectable manner to a server via a telecommunication network.

**20.** The identifying system for an identifying marker according to claim 17, wherein said unique attribute detecting means is a polarizing plate which detects color difference anisotropy between said P polarized light and S polarized light, where P polarized light and S polarized light are respectively defined as a transmitted light from said polarizing plate slit when it is situated parallel and perpendicular to the direction of fiber orientation of said fibrous body.

**21.** The identifying system for an identifying marker according to claim 17, wherein said unique attribute detecting means is a spectrophotometer for detection of a color difference ($\Delta E$) of 3.0 or greater between said P polarized light and S polarized light.

**22.** The identifying system for an identifying marker according to claim 21, wherein said spectrophotometer is a spectrophotometer for detecting a color difference ($\Delta E$) at a specific wavelength from the infrared region to the ultraviolet region.

**23.** The identifying system for an identifying marker according to claim 17, wherein said unique attribute detecting means is a fluorescent X-ray analyzer for detecting fine particles made of an inorganic, organic and/or metallic material having an identifying function, which are present in the polymer layer formed inside said alternate laminated body.

**24.** The identifying system for an identifying marker according to claim 17, wherein said unique attribute detecting means is image recognizing means for recognizing an image of said alternate laminated body.

**25.** A method of providing an identification service which comprises:

a presenting step for presenting identifying marker data containing at least specifications and form of distribution relating to a client's product or service bearing the identifying marker from a service provider to a client,
a selection step for selecting an unique attribute from among the unique attributes of an optical interference fiber comprising an alternate laminated body obtained by laminating layers of polymers with different refractive indexes in an alternating fashion, based on the presented identifying marker data, in order to identify the product or service,
a determining step for determining the attachment mode for attaching said identifying marker, of which at least a portion contains a planar arranged fibrous body as the identification target, to the product or service,
a fabricating step for fabricating said identifying marker having the selected unique attribute into said attachment mode, and
a providing step for providing the fabricated identifying marker to the client.

**26.** The method of providing an identification service according to claim 25, which includes a matching step for uniquely matching said unique attribute selected by the service provider in a one-to-one correspondence with said product or service, and a storing step for storing the matched information in a database.

**27.** The method of providing an identification service according to claim 26, which also comprises a reading step for reading the unique attribute conveyed from said identifying marker attached to said product or service, a checking step for checking the read unique attribute against data stored in said database, and an ascertaining step for ascertaining said product or service based on said checking step.

**28.** The method of providing an identification service according to claim 25, wherein said unique attribute is the color difference anisotropy between said P polarized light and S polarized light at one or more specific wavelengths.

[Fig. 1]

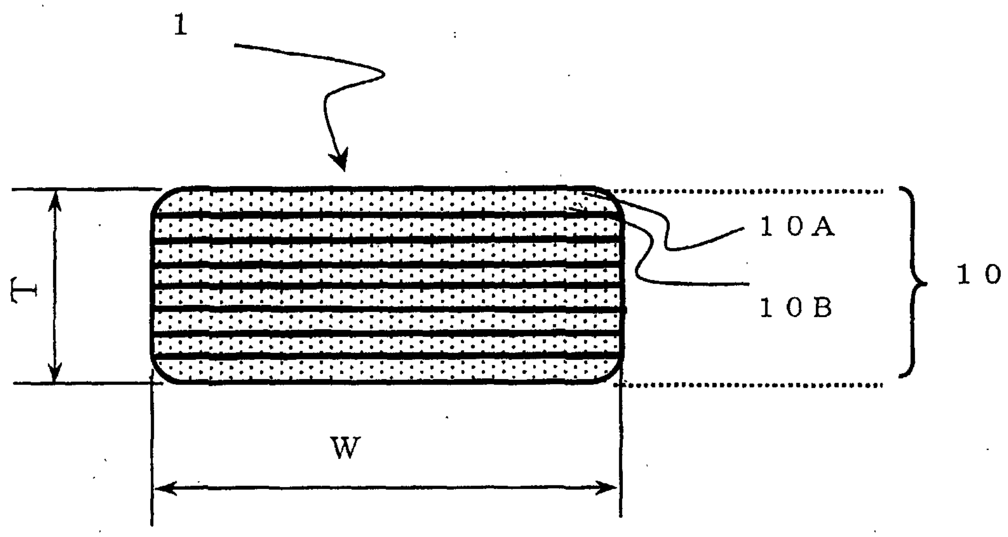


[Fig. 2]

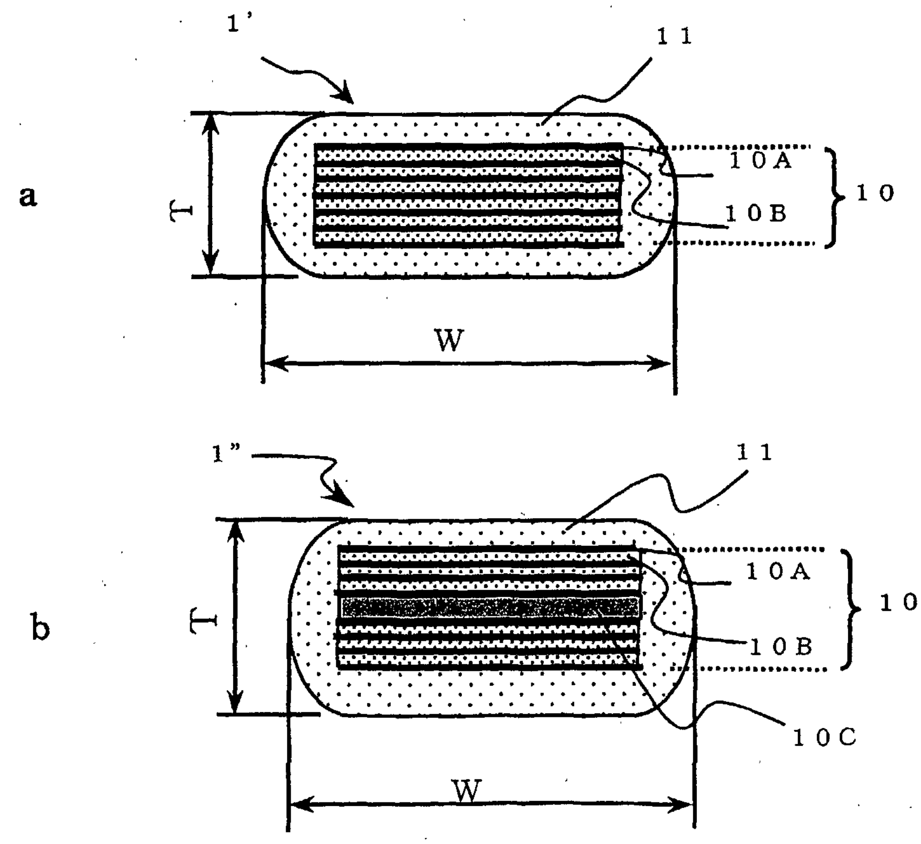

[Fig. 3]

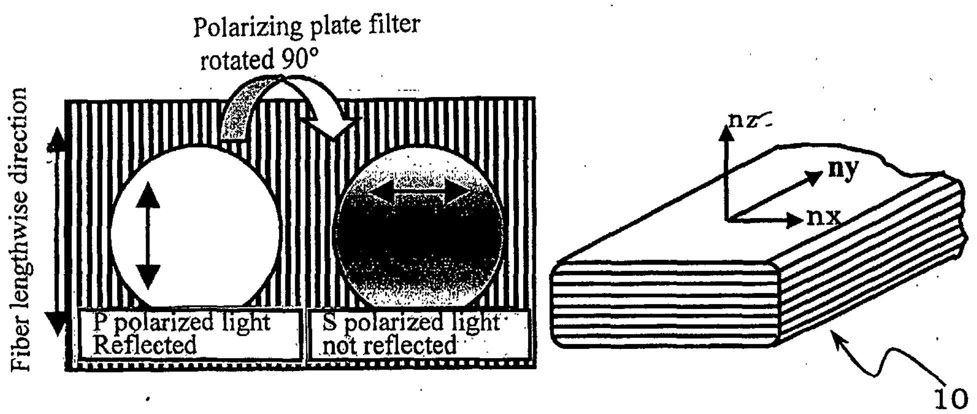


a Optical interference fiber

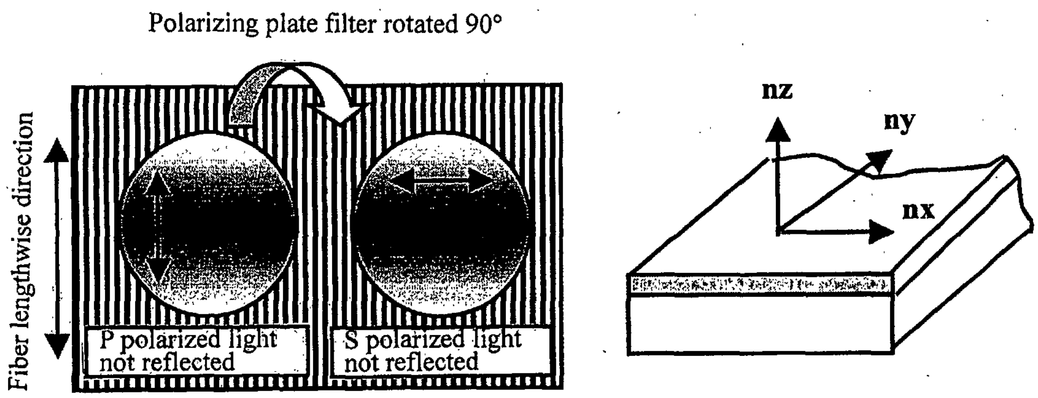


b Metal vapor deposited film slit yarn

[Fig. 4]

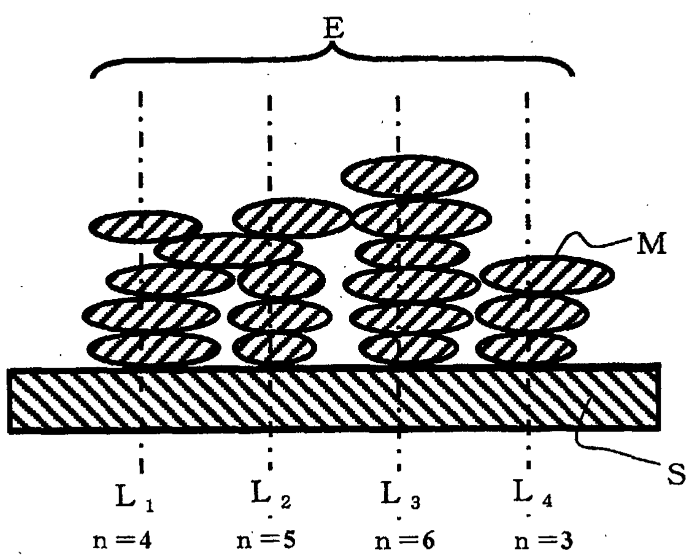

[Fig. 5]

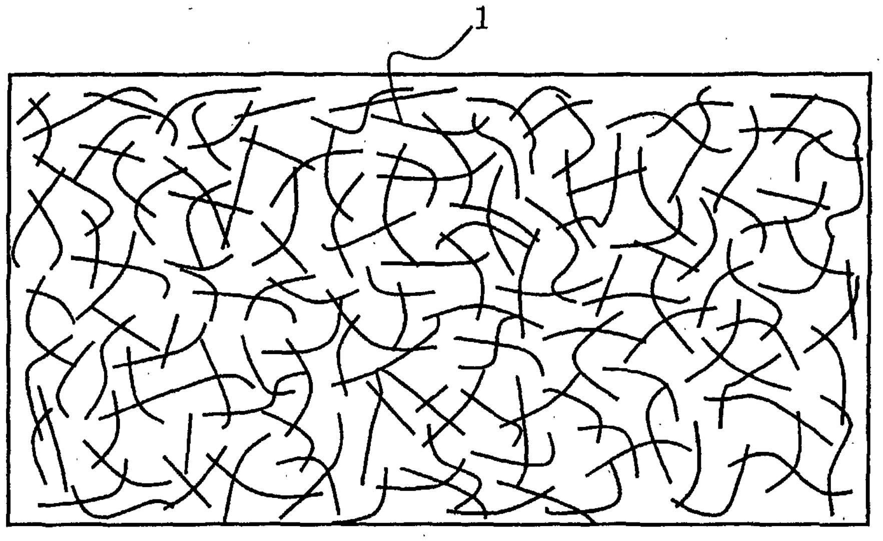


[Fig. 6]

a

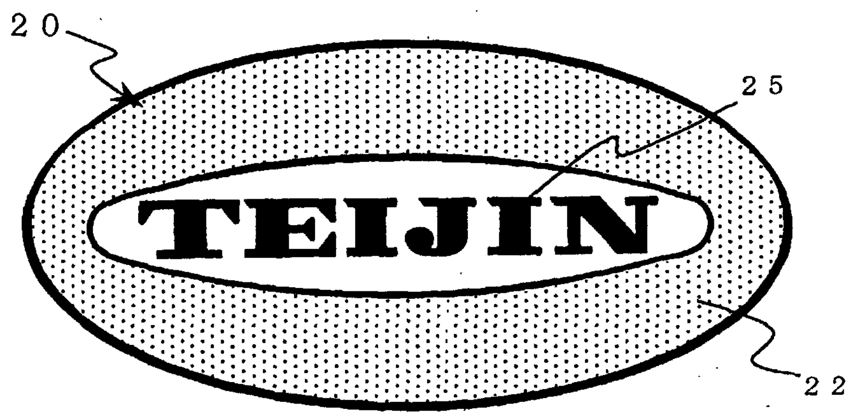


b

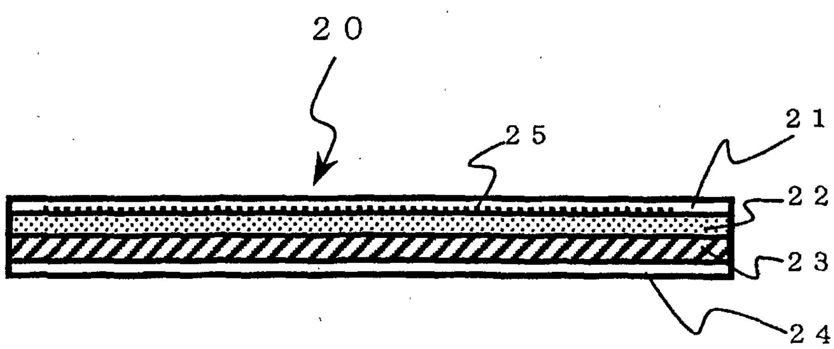

[Fig. 7]

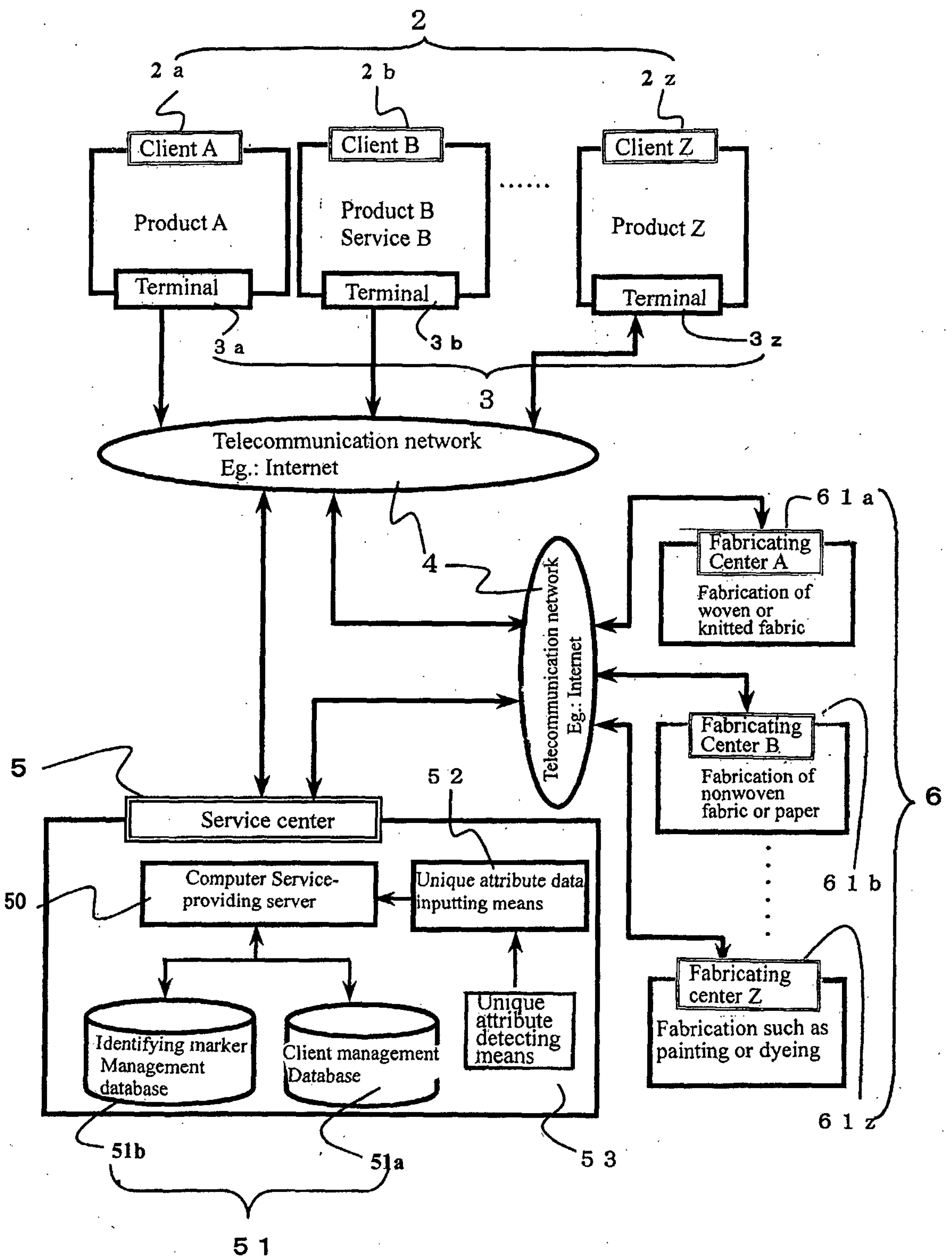
2
2 a
2 b
2 z
Client A
Product A
Terminal
Client B
Product B
Service B
Terminal
Client Z
Product Z
Terminal
3 a
3 b
3 z
3
Telecommunication network
Eg.: Internet
4
Telecommunication network
Eg.: Internet
6 1 a
Fabricating Center A
Fabrication of woven or knitted fabric
Fabricating Center B
Fabrication of nonwoven fabric or paper
6 1 b
Fabricating center Z
Fabrication such as painting or dyeing
6 1 z
6
5
Service center
5 2
50
Computer Service-providing server
Unique attribute data inputting means
Identifying marker Management database
Client management Database
Unique attribute detecting means
51b
51a
5 3
5 1

[Fig. 8]

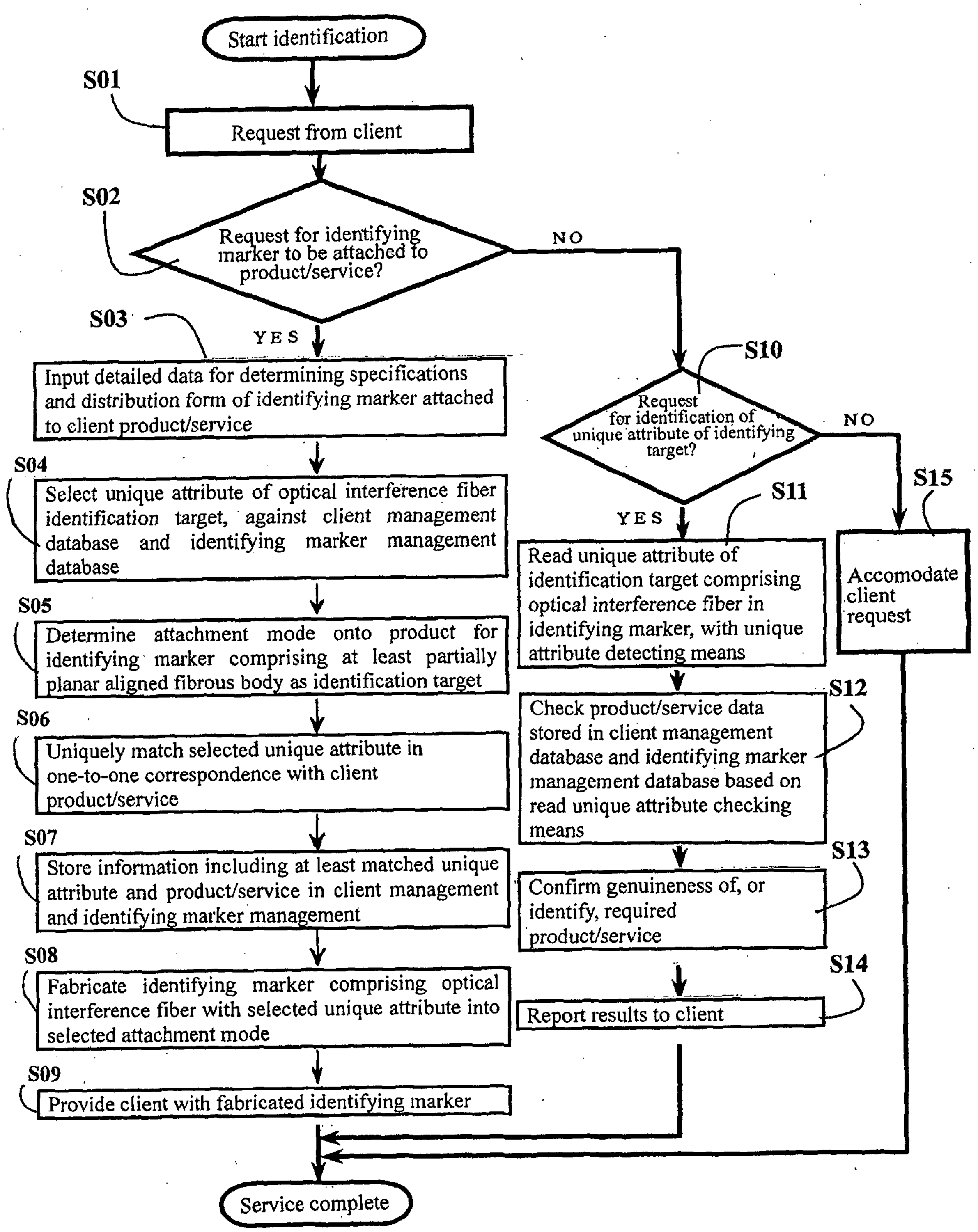
Start identification
S01
Request from client
S02
Request for identifying marker to be attached to product/service?
NO
YES
S03
Input detailed data for determining specifications and distribution form of identifying marker attached to client product/service
S04
Select unique attribute of optical interference fiber identification target, against client management database and identifying marker management database
S05
Determine attachment mode onto product for identifying marker comprising at least partially planar aligned fibrous body as identification target
S06
Uniquely match selected unique attribute in one-to-one correspondence with client product/service
S07
Store information including at least matched unique attribute and product/service in client management and identifying marker management
S08
Fabricate identifying marker comprising optical interference fiber with selected unique attribute into selected attachment mode
S09
Provide client with fabricated identifying marker
S10
Request for identification of unique attribute of identifying target?
NO
YES
S11
Read unique attribute of identification target comprising optical interference fiber in identifying marker, with unique attribute detecting means
S12
Check product/service data stored in client management database and identifying marker management database based on read unique attribute checking means
S13
Confirm genuineness of, or identify, required product/service
S14
Report results to client
S15
Accomodate client request
Service complete

[Fig. 9]



| Sample No. | Fiber 1 | Fiber 2 | Fiber 3 | Fiber 4 | Fiber 5 | Fiber 6 |
|---|---|---|---|---|---|---|
| Polymer A | I-PENFT*1 | I-PET*2 | I-PET1*3 | I-PET2*4 | PENFT*5 | PS*6 |
| Polymer B | NY6*7 | PMMA*8 | PMMA*8 | NY6*7 | PET*9 | NY6*7 |
| SP 1 | 21.2 | 21.5 | 21.0 | 21.5 | 22.2 | 17.4 |
| SP 2 | 22.5 | 18.3 | 18.3 | 22.5 | 21.5 | 22.2 |
| SP ratio | 0.91 | 1.17 | 1.15 | 0.96 | 1.03 | 0.77 |
| W1*10 nm | 80 | 95 | 70 | 72 | 70 | 120 |
| W2*11 nm | 85 | 110 | 73 | 78 | 61 | 150 |

*1. I-PENTFT: 5-Sodium isophthalic acid (1.5 mol%) copolymerized polyethylene 2,6-naphthalate
*2. I-PET1: 5-Sodium isophthalic acid (1.5 mol%) copolymerized polyethylene terephthalate
*3. NP-PET: Neopentyl glycol (20 mol%) copolymerized polyethylene terephthalate
*4. I-PET2: 5-Sodium isophthalic acid (0.5 mol%) copolymerized polyethylene 2,6-naphthalate
*5. PENFT: Polyethylene 2,6-naphthalate
*6. PS: Polystyrene
*7. NY6: Mylon-6
*8. PMMA: Polymethyl methacrylate
*9. PET: Polyethylene terephthalate
*10. W1: Average thickness of polymer A layer
*11. W2: Average thickness of polymer B layer

[Fig. 10]

| Sample No. | Fiber 1 | Fiber 2 | Fiber 3 | Fiber 4 | Fiber 5 | Fiber 6 |
|---|---|---|---|---|---|---|
| n1x | 1.632 | 1.561 | 1.550 | 1.561 | 1.632 | 1.594 |
| n1z | 1.750 | 1.694 | 1.651 | 1.694 | 1.750 | 1.588 |
| n2x | 1.531 | 1.491 | 1.492 | 1.516 | 1.564 | 1.516 |
| n2z | 1.565 | 1.472 | 1.472 | 1.569 | 1.694 | 1.557 |
| $\lvert n1x-n2x \rvert$ | 0.119 | 0.069 | 0.058 | 0.045 | 0.071 | 0.078 |
| $\lvert n1z-n2z \rvert$ | 0.185 | 0.222 | 0.178 | 0.125 | 0.056 | 0.031 |
| $\Delta n12$*1 | 0.065 | 0.153 | 0.120 | 0.080 | -0.015 | -0.047 |
| Visual examina-tion of polariza-tion property | satis-factory | satis-factory | satis-factory | satis-factory | unsatis-factory | unsatis-factory |
| $\Delta E$ | 3.36 | 14.9 | 13.8 | 10.6 | 0.83 | 0.35 |
| Wavelength*2 | 527 | 631 | 438 | 470 | 430 | 840 |

*1. $\Delta n12 = \lvert n1z-n2z \rvert - \lvert n1x-n2x \rvert$
*2. $\Delta E$ measurement wavelength

[Fig. 11]

| Sample No. | Fiber 7 | Fiber 8 |
|---|---|---|
| Polymer A | PC*1 | I-PENFT*2 |
| Polymer B | PMMA*3 | Ny-6*4 |
| SP 1 | 20.3 | 21.2 |
| SP 2 | 18.3 | 22.5 |
| SP ratio | 1.11 | 0.94 |
| W1 nm*5 | 230 | 80 |
| W2 nm*6 | 259 | 85 |
| Fiber reflection wavelength (nm) | 1502 | 500 |
| Polymer C | - | 50 mmol% Co $CH_3COO_2 \cdot 4H_2O$-containing I-PENFT |
| W3 nm*7 | - | 1080 |

*1 PC: Polycarbonate
*2 I-PENFT: 5-isophthalic acid (0.8 mol%) copolymerized polyethylene 2,6-naphthalate
*3 PMMA: Polymethyl methacrylate
*4 Ny-6: nylon-6
*5 W1: Average thickness of polymer A layer
*6 W2: Average thickness of polymer B layer
*7 W3: Average thickness of polymer C layer

## INTERNATIONAL SEARCH REPORT

International application No.
PCT/JP03/04333

A. CLASSIFICATION OF SUBJECT MATTER
Int.Cl7 D01F8/04, G09F3/02

According to International Patent Classification (IPC) or to both national classification and IPC

B. FIELDS SEARCHED

Minimum documentation searched (classification system followed by classification symbols)
Int.Cl7 D01F8/04, G09F3/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>A | JP 11-107109 A (TEIJIN LTD., NISSAN MOTOR CO., LTD., TANAKA KIKINZOKU KOGYO KABUSHIKI KAISHA), 20 April, 1999 (20.04.99), Full text; Fig. 1 (Family: none) | 1,3-9,11,14, 17-24<br>2,10,12-13, 15-16 |
| X<br>Y<br>A | EP 1006221 A1 (NISSAN MOTOR CO., LTD., TANAKA KIKINZOKU KOGYO KABUSHIKI KAISHA, TEIJIN LTD.), 07 June, 2000 (07.06.00), Full text; Figs. 1 to 3 & JP 2000-170028 A Full text; Figs. 1 to 3 | 2,10<br>12-13<br>1,3-9,11, 14-24 |
| X<br>A | JP 6-8679 A (Mitsubishi Paper Mills Ltd.), 18 January, 1994 (18.01.94), Column 3, line 29 to column 4, line 32; Fig. 1 (Family: none) | 15<br>23 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>30 July, 2003 (30.07.03) | Date of mailing of the international search report<br>12 August, 2003 (12.08.03) |
| Name and mailing address of the ISA/<br>Japanese Patent Office<br>Facsimile No. | Authorized officer<br><br>Telephone No. |

Form PCT/ISA/210 (second sheet) (July 1998)

## INTERNATIONAL SEARCH REPORT

International application No.
PCT/JP03/04333

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 4-174707 A (Toray Industries, Inc.),<br>22 June, 1992 (22.06.92),<br>Full text; Figs. 1 to 2<br>(Family: none) | 16<br>24 |
| Y<br>A | US 5974150 A (TRACER DETECTION TECHNOLOGY CORP.),<br>26 October, 1999 (26.10.99),<br>Full text; Figs. 1 to 3<br>& JP 2001-518414 A<br>Full text; Figs. 1 to 3<br>& WO 99/17486 A1 | 12-13<br>1-11,14-24 |
| A | JP 2000-226737 A (Toray Industries, Inc.),<br>15 August, 2000 (15.08.00),<br>Column 3, lines 17 to 35<br>(Family: none) | 7 |
| A | JP 2000-199171 A (Toyobo Co., Ltd.),<br>18 July, 2000 (18.07.00),<br>Column 5, lines 4 to 40; Fig. 2<br>(Family: none) | 20 |

Form PCT/ISA/210 (continuation of second sheet) (July 1998)

**INTERNATIONAL SEARCH REPORT**

International application No.
PCT/JP03/04333

**Box I Observations where certain claims were found unsearchable (Continuation of item 2 of first sheet)**

This international search report has not been established in respect of certain claims under Article 17(2)(a) for the following reasons:

1. [x] Claims Nos.: 25-28
because they relate to subject matter not required to be searched by this Authority, namely:
Claims 25 to 28 pertains to methods for doing businesses and thus relates to a subject matter which this International Searching Authority is not required, under the provisions of Article 17(2)(a)(i) of the PCT and Rule 39.1(iv) of the Regulations under the PCT, to search.

2. [ ] Claims Nos.:
because they relate to parts of the international application that do not comply with the prescribed requirements to such an extent that no meaningful international search can be carried out, specifically:

3. [ ] Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

1. [ ] As all required additional search fees were timely paid by the applicant, this international search report covers all searchable claims.

2. [ ] As all searchable claims could be searched without effort justifying an additional fee, this Authority did not invite payment of any additional fee.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest** [ ] The additional search fees were accompanied by the applicant's protest.
[ ] No protest accompanied the payment of additional search fees.

Form PCT/ISA/210 (continuation of first sheet (1)) (July 1998)